(19) Europäisches Patentamt
European Patent Office
Office européen des brevets

(11) EP 2 635 620 B1

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(21) Anmeldenummer: **11788086.4**

(22) Anmeldetag: **03.11.2011**

(51) Int Cl.:
***C08G 64/02*** *(2006.01)* ***C08G 64/30*** *(2006.01)*
***C08G 64/34*** *(2006.01)*

(86) Internationale Anmeldenummer:
**PCT/EP2011/069348**

(87) Internationale Veröffentlichungsnummer:
**WO 2012/059550 (10.05.2012 Gazette 2012/19)**

(54) **VERFAHREN ZUR HERSTELLUNG VON POLYCARBONATPOLYOLEN DURCH IMMORTALE POLYMERISATION VON CYCLISCHEN CARBONATEN**

METHOD FOR PRODUCING POLYCARBONATE POLYOLS BY THE IMMORTAL POLYMERIZATION OF CYCLIC CARBONATES

PROCÉDÉ DE PRODUCTION DE POLYOLS DE POLYCARBONATE PAR POLYMÉRISATION IMMORTELLE DE CARBONATES CYCLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2010 DE 102010043409**

(43) Veröffentlichungstag der Anmeldung:
**11.09.2013 Patentblatt 2013/37**

(73) Patentinhaber: **Covestro Deutschland AG**
**51373 Leverkusen (DE)**

(72) Erfinder:
- **MÜLLER, Thomas, Ernst**
  **52062 Aachen (DE)**
- **GÜRTLER, Christoph**
  **50676 Köln (DE)**
- **KERMAGORET, Anthony**
  **F-29350 Moelan sur mer (FR)**
- **DIENES, Yvonne**
  **30173 Hannover (DE)**
- **BUSYGIN, Igor**
  **California 94720-1462 (US)**
- **KÖHLER, Burkhard**
  **34289 Zierenberg (DE)**
- **LEITNER, Walter**
  **52074 Aachen (DE)**

(74) Vertreter: **Levpat**
**c/o Covestro AG**
**Alfred-Nobel-Straße 10**
**40789 Monheim am Rhein (DE)**

(56) Entgegenhaltungen:
**WO-A1-2010/028362 US-A1- 2003 032 761**
**US-A1- 2006 089 252 US-A1- 2006 223 973**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von Polycarbonatpolyolen durch immortale Polymerisation von cyclischen Carbonaten in Gegenwart von Doppelmetallcyanid-Katalysatoren (DMC-Katalysatoren) und Kettenüberträgern bestehend aus Polyethercarbonatpolyolen.

Eine immortale Polymerisation im Sinne der Erfindung bedeutet eine ringöffnende Polymerisation, wobei cyclisches Carbonat in Anwesenheit von Kettenüberträgermolekülen unter Ringöffnung reagiert. Die Polymerisation wird hier als immortal bezeichnet, wenn die Polymerisation im Idealfall ohne Kettenabbruchreaktionen erfolgt und die Anzahl der generierten Makromoleküle gleich der Anzahl der eingesetzten Kettenüberträgermoleküle ist. In einer immortalen Polymerisation kann über das Verhältnis der Anzahl der eingesetzten Monomermoleküle zu der Anzahl der Kettenüberträgermoleküle das Molekulargewicht der generierten Makromoleküle eingestellt werden. Über die Funktionalität der Kettenüberträgermoleküle wird die Funktionalität der generierten Makromoleküle bestimmt.

In Polymer (1992), 33(9), 1941-1948 wird die lebende Polymerisation von Neopentylglykolcarbonat mit Tetraphenylporphyrin-Aluminium-Komplexen als Katalysator beschrieben. Da die Reaktion ohne den Einsatz von Kettenüberträgern durchgeführt wurde, ist das Molekulargewicht der generierten Makromoleküle durch die Anzahl der Katalysatormoleküle bestimmt. Nachteilig ist, dass die Funktionalität der generierten Makromoleküle nicht kontrolliert wird. Nachteilig sind auch die Empfindlichkeit des Katalysators gegenüber Spuren von Wasser sowie die schlechte technische Verfügbarkeit des Katalysators.

In Journal of Polymer Science, Part A (2000), 38(16), 2861-2871 wird die immortale Polymerisation von Epoxiden, Lactonen und Methacrylsäureestern mit Aluminium-Metalloporphyrinen sowie Episulfiden mit Zink-Metalloporphyrinen beschrieben. Sie ist gekennzeichnet durch den Einsatz protischer Verbindungen wie Carbonsäuren und HCl als Kettenüberträger. Der Einsatz von Alkoholen als Kettenüberträger ist auf Epoxide und Lactone beschränkt, wobei die eingesetzten Katalysatoren empfindlich gegen große Mengen an Alkoholgruppen sind und daher niedermolekulare Alkohole nicht als Starter geeignet sind. Nachteilig sind auch die Empfindlichkeit des Katalysators gegenüber Spuren von Wasser sowie die schlechte technische Verfügbarkeit des Katalysators. Experimentelle Details werden in der Publikation nicht genannt.

In Macromolecules (2001), 34(18), 6196-6201 wird die immortale Polymerisation von Lactonen und Lactiden mit Aluminium-Komplexen als Katalysator beschrieben. Nachteilig ist der Einsatz von Benzylalkohol als monofunktionellem Kettenüberträgermolekül. Nachteilig sind auch die Empfindlichkeit des Katalysators gegenüber Spuren von Wasser sowie die schlechte technische Verfügbarkeit des Katalysators.

In Chemistry - A European Journal (2008), 14 (29), 8772-8775 wird die immortale Polymerisation von Trimethylencarbonat unter Einsatz von Benzylalkohol als Kettenüberträger beschrieben. Nachteilig ist der Einsatz eines monofunktionellen Kettenüberträgermoleküls. In Macromol. Rapid Commun. (2009), 30, 2128-2135 wird der Einsatz von Dihydroxy-Verbindungen als Starter beschrieben. Nachteilig ist in beiden Arbeiten der Einsatz von Zink-Imidat-Komplexen als Katalysatoren, die technisch nicht einfach verfügbar und gegenüber Luft empfindlich sind, so dass eine strikte Inertisierung für die Reaktion notwendig ist.

In der EP-A 1859863 und DE-A 10108485 wird die Konditionierung von DMC (Doppel-Metall-Cyanid) Katalysatoren für die Polymerisation von Epoxiden beschrieben. Nachteilig ist, dass die Katalysatoren bei dieser Reaktion empfindlich gegen die großen Mengen an Alkoholgruppen in den Startern sind und daher niedermolekulare Alkohole nicht als Starter geeignet sind.

WO-A 03/014186 offenbart die DMC-katalysierte ringöffnende Homo- und Copolymerisation von cyclischen Carbonaten, optional in Gegenwart einer oder mehrerer Starterverbindungen (Kettenüberträger), wobei als Kettenüberträger u.a. Polyetherpolyole und Polyesterpolyole offenbart werden. Polyethercarbonate als Kettenüberträger werden aber nicht offenbart.

Aufgabe der vorliegenden Erfindung war es, ein Verfahren zur immortalen Polymerisation von cyclischen Carbonaten zur Verfügung zu stellen, wobei sich das resultierende Polycarbonatpolyol durch eine Molekulargewichtsverteilung auszeichnet, die gegenüber der des Kettenüberträgers nicht wesentlich verbreitert ist. In einer bevorzugten Ausführungsform soll das resultierende Polycarbonatpolyol einen Anteil an primären OH-Gruppen von mindestens 80 % aufweisen.

Überraschenderweise wurde nun gefunden, dass sich cyclische Carbonate in einer immortalen Polymerisation mit DMC-Katalysatoren zu Polycarbonatpolyolen mit einer gegenüber dem Kettenüberträger nicht wesentlich verbreiterten Molekulargewichtsverteilung polymerisieren lassen, wobei als Kettenüberträger Polyethercarbonatpolyole eingesetzt werden.

Gegenstand der Erfindung ist daher ein Verfahren zur Herstellung von Polycarbonatpolyolen dadurch gekennzeichnet, dass cyclisches Carbonat in Gegenwart von DMC-Katalysator und Kettenüberträger bestehend aus Polyethercarbonatpolyolen polymerisiert werden. Als Kettenüberträger kann ein Polyethercarbonatpolyol oder auch Mischungen aus verschiedenen Polyethercarbonatpolyolen eingesetzt werden. Als cyclisches Carbonat kann ein cyclisches Carbonat oder auch Mischungen aus verschiedenen cyclischen Carbonaten eingesetzt werden.

Ein weiterer Gegenstand der Erfindung sind Polycarbonatpolyole hergestellt nach dem erfindungsgemäßen Verfahren. Die nach dem erfindungsgemäßen Verfahren hergestellten Polycarbonatpolyole enthalten Polyethergruppen und können daher auch als Polyethercarbonatpolyole angesehen werden. Zur begrifflichen Differenzierung von den eingesetzten Kettenüberträgern wird das nach dem erfindungsgemäßen Verfahren resultierende Produkt als Polycarbonatpolyol bezeichnet.

Vorzugsweise beträgt das Gewichtsverhältnis von eingesetztem Kettenüberträger zu eingesetztem cyclischen Carbonat 1 : 0,001 bis 1 : 50, besonders bevorzugt von 1 : 0,005 bis 1 : 5 und höchst bevorzugt 1 : 0,005 bis 1 : 1.

Das erfindungsgemäße Verfahren wird vorzugsweise in Gegenwart von 10 bis 2000 ppm DMC-Katalysator durchgeführt. Die bevorzugte Reaktionstemperatur beträgt 60 bis 160°C, besonders bevorzugt 80 bis 130°C. Zu hohe Reaktionstemperaturen sind von Nachteil, da dann unter Abspaltung von $CO_2$ auch Ethergruppen gebildet werden.

Die Reaktionsdauer beträgt im allgemeinen 1 bis 48 Stunden, vorzugsweise 2 bis 24 Stunden, so dass im Allgemeinen kein cyclisches Carbonat mehr im Reaktionsgemisch mehr enthalten ist. Alternativ wird die Vollständigkeit der Umsetzung der Reaktion überwacht und solange fortgeführt, bis kein cyclisches Carbonat im Reaktionsgemisch mehr enthalten ist. Der Reaktionsfortschritt kann hierzu beispielsweise mit Hilfe geeigneter Analysenmethoden (z.B. IR-, NMR-Spektroskopie, chromatographische Methoden nach Probenentnahme) überwacht werden oder rein empirisch durch Vergleichsversuche bestimmt werden.

Das erfindungsgemäße Verfahren kann in Gegenwart oder Abwesenheit eines inerten Lösungsmittels, wie z.B. Toluol, Chlorbenzol, 1,2-Dichlorethan, 1,2-Dimethoxyethan oder Dioxan, durchgeführt werden. Bevorzugt wird das erfindungsgemäße Verfahren in Abwesenheit eines inerten Lösungsmittels durchgeführt.

Cyclische Carbonate im Sinn der Erfindung sind Verbindungen der Formeln (I) und (II),

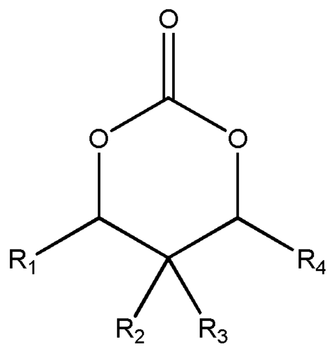

(I)

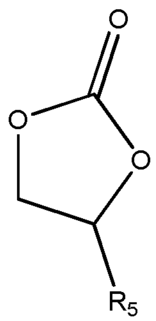

(II)

wobei

$R_1$, $R_4$ und $R_5$ unabhängig voneinander für Wasserstoff oder einen linearen oder verzweigen C1 bis C12 Alkylrest oder einen C6 bis C10 Arylrest und

$R_2$ und $R_3$ unabhängig voneinander für Wasserstoff oder einen linearen oder verzweigten C1 bis C12 Alkylrest oder einen C6 bis C10 Arylrest oder einen Allyloxymethylrest stehen.

Bevorzugte Verbindungen der Formel (I) sind Trimethylencarbonat, Neopentylglykolcarbonat, 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat und Pentaerythritdiallylethercarbonat. Besonders bevorzugt ist Trimethylencarbonat und Neopentylglykolcarbonat.

Bevorzugte Verbindungen der Formel (II) sind Ethylencarbonat, Propylencarbonat, und Phenylethylencarbonat.

Ganz besonders bevorzugt sind Verbindungen der Formel (I). Diese Verbindungen haben den Vorteil, dass bei der immortalen Polymerisation der cyclischen Carbonate gemäß Formel (I) in Gegenwart von DMC-Katalysator und Kettenüberträgern bestehend aus Polyethercarbonatpolyen nicht oder nur zu einem geringen Anteil unter Abspaltung von $CO_2$ auch Ethergruppen gebildet werden.

In einer höchst bevorzugten Ausführungsform der Erfindung werden Verbindungen der Formel (I) mit R1 = R4 = H oder Verbindungen der Formel (II) mit R5 = H eingesetzt. Beispiele der Formel (I) sind Trimethylencarbonat, Neopentylglycolcarbonat und 2-Methyl-1,3-propandiolcarbonat. Beispiel der Formel (II) ist Ethylencarbonat. Dies hat den Vorteil, dass durch den Einsatz dieser cyclischen Carbonate Polycarbonate erhalten werden, die primäre OH-Gruppen als Endgruppen enthalten.

DMC-Katalysatoren sind bekannt und in US-A 3404109, US-A 3829505, US-A 3941849 und US-A 5158922 beschrieben. Verbesserte DMC-Katalysatoren sind in US-A 5470813, EP-A 700949, EP-A 743093, EP-A 761798, WO-A 97/40086, WO-A 98/16310 und WO-A 00/47649 beschrieben. Besonders bevorzugt wurden DMC-Katalysatoren nach EP-A 700949 eingesetzt, die neben einer Doppel-Metall-Cyanid-Verbindung (z.B. Zinkhexacyanocobaltat(III)) und einem organischen Komplexliganden (z.B. *tert*-Butanol) noch ein Polyetherpolyol mit einem zahlenmittleren Molekulargewicht größer 500 g/mol enthalten. Für die in den Beispielen beschrieben Versuche wurde ein solcher DMC-Katalysator enthaltend ein Polypropylenglykol mit einem zahlenmittleren Molekulargewicht von 1000 g/mol eingesetzt.

Als Kettenüberträger werden Polyethercarbonatpolyole eingesetzt. Polyethercarbonatpolyole im Sinne der Erfindung weisen neben Carbonatgruppen auch Ethergruppen auf und werden beispielsweise durch katalytische Anlagerung von Alkylenoxiden (Epoxiden) und Kohlendioxid an H-funktionelle Startersubstanzen (Starter) hergestellt. Diese Reaktion ist in Schema (III) schematisch dargestellt, wobei R für einen organischen Rest wie Alkyl, Alkyaryl oder Aryl steht, die jeweils auch Heteroatome wie beispielsweise O, S, Si usw. enthalten können, und wobei n und m für eine ganzzahlige Zahl stehen, und wobei das hier im Schema (III) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (III) gezeigte Polyethercarbonatpolyol beschränkt. Als weiteres Produkt entsteht das in Schema (III) gezeigte cyclische Carbonat (beispielsweise für R = $CH_3$ Propylencarbonat).

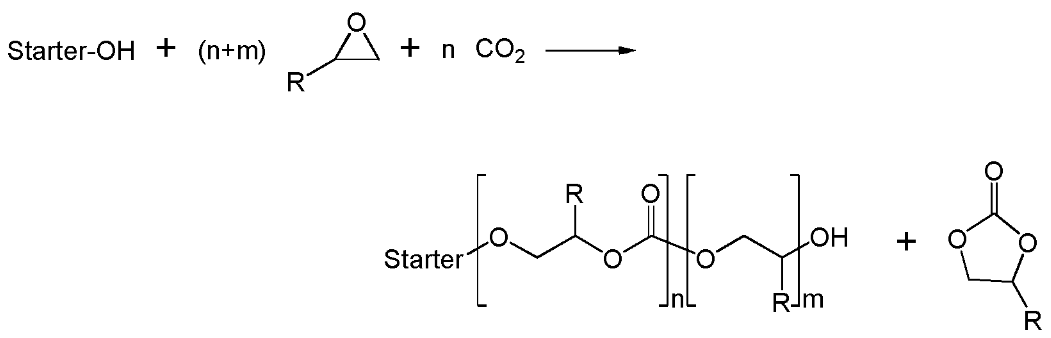

(III)

Vorzugsweise werden als Kettenüberträger Polyethercarbonatpolyole eingesetzt, die durch mit Doppelmetallcyaniden (DMC-Katalysatoren) katalysierte Copolymerisation von Kohlendioxid und Alkylenoxiden (wie beispielsweise Propylenoxid, Epichlorhydrin, Styroloxid, Cyclohexenoxid oder Butenoxiden) an H-funktionelle Startersubstanzen (Starter) hergestellt werden. Entsprechende Herstellverfahren sind beispielsweise beschrieben in EP Anmeldenummer 10000511.5, WO-A 2008/013731 oder US-A 20030149232.

Als Kettenüberträger können zusätzlich auch hydroxyfunktionelle Polycarbonate eingesetzt werden. Hydroxyfunktionelle Polycarbonate können beispielsweise über Kondensation von Diolen mit offenkettigen Dialkylcarbonaten unter Abspaltung des Alkylalkohols hergestellt werden. Eine alternative Herstellungsweise für hydroxyfunktionelle Polycarbonate besteht in der katalytischen Anlagerung von Alkylenoxiden (wie beispielsweise Ethylenoxid, Propylenoxid und/oder Butylenoxid) und Kohlendioxid an H-funktionelle Startersubstanzen (wie beispielsweise Glycerin, Propylenglykol und dessen höhere Homologe, Ethylenglykol und dessen höhere Homologe), wobei der Einbau von Alkylenoxid und Kohlendioxid alternierend erfolgt. In der Regel werden hierzu homogene Zink- oder Kobaltkatalysatoren eingesetzt.

Eine besonders bevorzugte Ausführungsform der Erfindung ist ein Verfahren zur Herstellung von Polycarbonatpolyolen dadurch gekennzeichnet, dass

(i) H-funktionelle Startersubstanz oder ein Gemisch aus mindestens zwei H-funktionellen Startersubstanzen vorgelegt werden, und gegebenenfalls Wasser und/oder andere leicht flüchtige Verbindungen entfernt ("Trocknung"), wobei der DMC-Katalysator, die H-funktionelle Startersubstanz oder das Gemisch aus mindestens zwei H-funktionellen Startersubstanzen vor oder nach der Trocknung zugesetzt werden,

(ii) Alkylenoxide und Kohlendioxid zu der aus Schritt (i) resultierenden Mischung zugesetzt werden ("Copolymerisation" unter Bildung des Polyethercarbonatpolyol-Kettenüberträgers),

(iii) zu dem aus Schritt (ii) resultierenden Gemisch (enthaltend DMC-Katalysator, Polyethercarbonatpolyol und cyclisches Carbonat) cyclisches Carbonat, das gleich oder verschieden sein kann von dem in der aus Schritt (ii) resultierenden Mischung enthaltenen cyclischen Carbonat, sowie gegebenenfalls (weiterer) DMC-Katalysator (der gleich oder verschieden sein kann von dem in Schritt (i) eingesetztem DMC-Katalysator) zugegeben wird, wobei das Gewichtsverhältnis von aus Schritt (ii) resultierenden Gemisch zu zugesetztem cyclischen Carbonat von 1 : 0,001 bis 1 : 50, besonders bevorzugt von 1 : 0,005 bis 1 : 5, höchst bevorzugt von 1 : 0,005 bis 1 : 1 beträgt, und diese resultierende Mischung bei einer Temperatur von 60 bis 160°C, besonders bevorzugt 80 bis 130°C zur Reaktion gebracht wird.

Zu Schritt (i):

Zur Herstellung von Polyethercarbonatpolyolen durch katalytische Anlagerung von Alkylenoxiden (Epoxiden) und Kohlendioxid an H-funktionelle Startersubstanzen (Starter) in Gegenwart der erfindungsgemäßen DMC-Katalysatoren wird die H-funktionelle Startersubstanz oder ein Gemisch aus mindestens zwei H-funktionellen Startersubstanzen vorgelegt und gegebenenfalls Wasser und/oder andere leicht flüchtige Verbindungen entfernt. Dies erfolgt beispielsweise durch Strippen mittels Stickstoff oder Kohlendioxid (ggf. unter vermindertem Druck) oder durch Destillation unter Vakuum bei Temperaturen von 50 bis 200°C, bevorzugt 80 bis 160°C, besonders bevorzugt bei 100 bis 140°C. Diese Vorbehandlung der Startersubstanz oder des Gemisches der Startersubstanzen wird im Folgenden vereinfacht als Trocknung bezeichnet.

Dabei kann der DMC-Katalysator bereits in der H-funktionellen Startersubstanz oder dem Gemisch von mindestens zwei H-funktionellen Startersubstanzen vorgelegt sein. Es ist jedoch auch möglich, einen getrockneten DMC-Katalysator erst nach der Trocknung der H-funktionellen Startersubstanz oder dem Gemisch der H-funktionellen Startersubstanzen zuzusetzen. Der DMC-Katalysator kann in fester Form oder als Suspension in einer H-funktionellen Startersubstanz zugegeben werden. Wird der Katalysator als Suspension zugegeben, wird diese bevorzugt vor der Trocknung der H-funktionellen Startersubstanz(en) zugefügt.

Vorzugsweise schließt sich an Schritt (i) noch ein Aktivierungsschritt an, wobei besonders bevorzugt eine Teilmenge (bezogen auf die Gesamtmenge der bei der Copolymerisation eingesetzten Menge an Alkylenoxiden) von einem oder mehreren Alkylenoxiden zu der aus Schritt (i) resultierenden Mischung zugesetzt wird, wobei diese Zugabe der Teilmenge an Alkylenoxid in Gegenwart oder Abwesenheit von $CO_2$ erfolgen kann und wobei gegebenenfalls die aufgrund der folgenden exothermen chemischen Reaktion auftretende Temperaturspitze ("Hotspot") und/oder ein Druckabfall im Reaktor abgewartet wird. Der Hotspot tritt verstärkt auf, wenn der Aktivierungsschritt in Abwesenheit von $CO_2$ durchgeführt wird.

Zu Schritt (ii):

Die Dosierung eines oder mehrerer Alkylenoxide und des Kohlendioxids kann simultan oder sequentiell erfolgen, wobei die gesamte Kohlendioxidmenge auf einmal oder dosiert über die Reaktionszeit zugegeben werden kann. Vorzugsweise erfolgt eine Dosierung des Kohlendioxids. Die Dosierung eines oder mehrerer Alkylenoxide erfolgt simultan oder sequentiell zur Kohlendioxid Dosierung. Werden mehrere Alkylenoxide zur Synthese der Polyethercarbonatpolyole eingesetzt, so kann deren Dosierung simultan oder sequentiell über jeweils separate Dosierungen erfolgen oder über eine oder mehrere Dosierungen, wobei mindestens zwei Alkylenoxide als Gemisch dosiert werden. Über die Art der Dosierung der Alkylenoxide und des Kohlendioxids ist es möglich, statistische, alternierende, blockartige oder gradientenartige Polyethercarbonatpolyole zu synthetisieren.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Für das erfindungsgemäße Verfahren hat sich weiterhin gezeigt, dass die Copolymerisation zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 110°C durchgeführt wird. Werden Temperaturen unterhalb von 50°C eingestellt, kommt die Reaktion zum Erliegen. Bei Temperaturen oberhalb von 150°C steigt die Menge an unerwünschten Nebenprodukten stark an. Weiterhin ist zu beachten, dass das $CO_2$ bei der Wahl von Druck und Temperatur vom gasförmigen Zustand möglichst in den flüssigen und/oder überkritischen Zustand übergeht. $CO_2$ kann jedoch auch als Feststoff in den Reaktor gegeben werden und dann unter den gewählten Reaktionsbedingungen in den flüssigen und/oder überkritischen Zustand übergehen.

Bevorzugte Reaktoren für die Herstellung der Polyethercarbonatpolyolen sind Rohrreaktoren, Rührkessel, und Schlaufenreaktoren. Die Zugabe des Alkylenoxids und des $CO_2$ kann unabhängig voneinander absatzweise, halbkontinuierlich (semi-batch) oder kontinuierlich erfolgen. Aus Sicherheitsgründen sollte bei Verwendung von Propylenoxid oder Ethylenoxid der Gehalt an freiem Alkylenoxid 15 Gew.-% im Reaktionsgemisch des Rührkessels nicht übersteigen (siehe beispielsweise WO-A 2004/081082; Seite 3; Zeile 14). Sowohl in der semi-batch Anwendung, bei der das Produkt erst nach Ende der Reaktion entnommen wird, als auch in der kontinuierlichen Anwendung, bei der das Produkt kontinuierlich entnommen wird, ist daher besonders auf die Dosiergeschwindigkeit des Epoxids zu achten. Sie ist so einzustellen, dass trotz der inhibierenden Wirkung des Kohlendioxids das Epoxid genügend schnell abreagiert. Es ist möglich, das Kohlendioxid kontinuierlich oder diskontinuierlich zuzuführen. Dies hängt davon ab, ob das Epoxid schnell genug verbraucht wird und ob das Produkt gegebenenfalls $CO_2$-freie Polyether-Blöcke enthalten soll. Die Menge des Kohlendioxids (angegeben als Druck) kann bei der Zugabe des Epoxids ebenso variieren. Es ist möglich, während der Zugabe

des Epoxids den $CO_2$-Druck allmählich zu steigern oder zu senken oder gleich zu lassen.

Eine weitere mögliche Ausführungsform im Rührkessel ist die kontinuierliche Zugabe des Starters (continuous addition of starter; CAOS-Verfahren). Es ist jedoch nicht notwendig, den Starter kontinuierlich oder Portionsweise zuzugeben. Er kann auch bereits zu Beginn der Reaktion vollständig vorgelegt sein.

Allgemein können für das erfindungsgemäße Verfahren **Alkylenoxide** mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein-oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxy-propyl-ethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt.

Als geeigneter **H-funktioneller Startersubstanz** (auch als "Starter" bezeichnet) können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus Wasser, ein- oder mehrwertige Alkohole, ein- oder mehrwertige Amine, mehrwertige Thiole, Carbonsäuren, Aminoalkohole, Aminocarbonsäuren, Thioalkohole, Hydroxyester, Polyetherpolyole, Polyesterpolyole, Polyesteretherpolyole, Polyethercarbonatpolyole, Polycarbonatpolyole, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di-und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF SE), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem

Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des weiteren können als H-funktionelle Startersubstanzen Polycarbonatdiole eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als H-funktionelle Startersubstanzen eingesetzt werden.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (IV),

$$HO\text{-}(CH_2)_x\text{-}OH \qquad (IV)$$

wobei x eine Zahl von 1 bis 20, bevorzugt eine gerade Zahl von 2 bis 20 ist. Beispiele für Alkohole gemäß Formel (IV) sind Ethylenglycol, 1,4-Butandiol, 1,6-Hexandiol, 1,8-Octandiol, 1,10-Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (IV) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein Molekulargewicht Mn im Bereich von 62 bis 4500 g/mol und eine Funktionalität von 2 bis 3 und insbesondere ein Molekulargewicht Mn im Bereich von 62 bis 3000 g/mol und eine Funktionalität von 2 bis 3.

<u>Zu Schritt</u> <u>(iii):</u>

DMC-Katalysator kann in Schritt (iii) hinzugefügt werden, um die Konzentration an DMC-Katalysator im Reaktionsgemisch zu erhöhen.

Vorzugsweise erfolgt in Schritt (iii) aber keine Zugabe von DMC-Katalysator, denn überraschenderweise wurde

gefunden, dass der aus Schritt (ii) resultierende Polyethercarbonatpolyol-Kettenüberträger noch DMC-Katalysator enthält, der für die nachfolgende immortale Polymerisation ausreichende katalytische Aktivität aufweist. Der Vorteil dieser Ausführungsform ist somit, dass der für die immortale Polymerisation der cyclischen Carbonate benötigte DMC-Katalysator bereits im Kettenüberträger vorhanden ist.
Schritt (iii) wird vorzugsweise in Gegenwart von 10 bis 2000 ppm DMC-Katalysator durchgeführt. Die bevorzugte Reaktionstemperatur beträgt 60 bis 160°C, besonders bevorzugt 80 bis 130°C. Zu hohe Reaktionstemperaturen sind von Nachteil, da dann unter Abspaltung von $CO_2$ auch Ethergruppen gebildet werden.

Die Reaktionsdauer in Schritt (iii) beträgt im allgemeinen 1 bis 48 Stunden, vorzugsweise 2 bis 24 Stunden, so dass im Allgemeinen kein cyclisches Carbonat mehr im Reaktionsgemisch mehr enthalten ist. Alternativ wird die Vollständigkeit der Umsetzung der Reaktion gemäß Schritt (iii) überwacht und solange fortgeführt, bis kein cyclisches Carbonat im Reaktionsgemisch mehr enthalten ist. Der Reaktionsfortschritt kann hierzu beispielsweise mit Hilfe geeigneter Analysenmethoden (z.B. IR-, NMR-Spektroskopie, chromatographische Methoden nach Probenentnahme) überwacht werden oder rein empirisch durch Vergleichsversuche bestimmt werden.

Das Verfahren gemäß Schritt (iii) kann in Gegenwart oder Abwesenheit eines inerten Lösungsmittels, wie z.B. Toluol, Chlorbenzol, 1,2-Dichlorethan, 1,2-Dimethoxyethan oder Dioxan, durchgeführt werden. Bevorzugt wird das erfindungsgemäße Verfahren in Abwesenheit eines inerten Lösungsmittels durchgeführt.

In einer alternativen Ausführungsform der Erfindung wird als Kettenüberträger ein Polycarbonatpolyol eingesetzt, welches gemäß dem Verfahren der vorliegenden Erfindung hergestellt wurde. Es handelt sich also um ein Verfahren zur Herstellung von Polycarbonatpolyolen dadurch gekennzeichnet, dass cyclisches Carbonat in Gegenwart von DMC-Katalysator und nach dem erfindungsgemäßen Verfahren hergestellten Polycarbonatpolyol (als Kettenüberträger) polymerisiert wird. Vorzugsweise wird hierzu das als Kettenüberträger eingesetzte Polycarbonat und das cyclische Carbonat in einem Gewichtsverhältnis von 1 : 0,001 bis 1 : 50, besonders bevorzugt von 1 : 0,005 bis 1 : 5, höchst bevorzugt von 1 : 0,005 bis 1 : 1 eingesetzt. Diese als als Kettenüberträger eingesetzten Polycarbonatpolyole werden hierzu in einem separaten Reaktionsschritt zuvor hergestellt.

Das erfindungsgemäße Verfahren erlaubt den Zugang zu Polycarbonatpolyolen, die eine gegenüber dem Kettenüberträger nicht oder nicht wesentlich verbreiterte Molekulargewichtsverteilung aufweisen und sich durch eine definierte OH-Funktionalität auszeichnen. Durch geeignete Wahl des cyclischen Carbonats kann in der Endgruppe das Verhältnis zwischen primären und sekundären OH-Gruppen eingestellt werden. Wird Trimethylencarbonat, Neopentylglycolcarbonat, 2-Methyl-1,3-propandiolcarbonat oder Ethylencarbonat als cyclisches Carbonat verwendet, werden Polycarbonatpolyole erhalten, die als Endgruppen nur primäre OH-Gruppen aufweisen.

Im Vergleich mit sekundären OH-Gruppen zeigen primäre OH-Gruppen eine höhere Reaktivität beispielsweise in der Umsetzung mit Isocyanaten zu Urethaneinheiten. In der Umsetzung von Polyolen mit Diisocyanaten und/oder Polyisocyanaten führt dies zu einer schnelleren Aushärtung der Materialien. Einsatzgebiete sind die Herstellung von Weichschäumen, Hartschäumen, Thermoplastischen Urethanen (TPUs), Klebstoffen sowie in Lacken und Dispersionen. Zielbranchen sind u.a. die Hersteller von Präpolymeren und Polyurethanwerkstoffen.

Das erfindungsgemäße Verfahren ist ohne aufwendige Inertgastechnik durchführbar und verläuft schnell bei mäßigen Temperaturen, und vorzugsweise ohne dass inerte Lösungsmittels, wie z.B. Toluol, Chlorbenzol, 1,2-Dichlorethan, 1,2-Dimethoxyethan oder Dioxan benötigt werden. Ein hoher Anteil an primären OH-Endgruppen kann ansonsten nur durch Einsatz von Ethylenoxid in der Polyethercarbonat-Herstellung erzielt werden. Der Einsatz von Ethylenoxid ist jedoch aus Gründen der Arbeitssicherheit und Toxizität bedenklich. Unter den Reaktionsbedingungen der Polyethercarbonat-Herstellung überwiegt in Gegenwart von Kohlendioxid die DMC katalysierte Nebenreaktion zwischen Ethylenoxid und Kohlendioxid zu cyclischem Ethylencarbonat.

## Beispiele

Das Gewichts- und Zahlenmittel des Molekulargewichts der entstandenen Polymere wurde mittels Gelpermeations-Chromatographie (GPC) bestimmt. Es wurde vorgegangen nach DIN 55672-1: "Gelpermeationschromatographie, Teil 1 - Tetrahydrofuran als Elutionsmittel". Dabei wurden Polystyrolproben bekannter Molmasse zur Kalibrierung verwendet.

Die Polydispersität ist das Verhältnis von Gewichtsmittel zu Zahlenmittel des Molekulargewichts. Die Polydispersität wird im Sinne der Erfindung zur Beurteilung der Breite der Molekulargewichtsverteilung herangezogen, d.h. je höher der Wert der Polydispersität ist, desto breiter ist die Molekulargewichtsverteilung.

Die OH-Zahl wurde in Anlehnung an DIN 53240-2 bestimmt, wobei jedoch *N*-Methylpyrrolidon anstelle von THF/Dichlormethan als Lösungsmittel verwendet wurde. Es wurde mit 0,5 molarer ethanolischer KOH titriert (Endpunktserkennung mittels Potentiometrie). Als Prüfsubstanz wurde Rizinusöl mit durch Zertifikat festgelegter OH-Zahl eingesetzt. Die Angabe der Einheit in "$mg_{KOH}$/g" bezieht sich auf mg[KOH]/g[Polyethercarbonatpolyol].

Das Verhältnis von gebildetem Propylencarbonat zu Polyethercarbonatpolyol wurden mittels NMR Spektroskopie (Firma Bruker, 400 Ultrashield, 400 MHz, 16 Scans) bestimmt. Die Probe wurde jeweils in deuteriertem Chloroform

gelöst. Die relevanten Resonanzen im $^1$H-NMR Spektrum (bezogen auf TMS = 0 ppm) sind wie folgt:

- Polyetherpolyol (Ethereinheiten im Polymer ohne eingebautes Kohlendioxid): Resonanzen bei 1,11 bis 1,17 ppm mit der Fläche A, Fläche der Resonanz entspricht 3 H Atomen.
- Carbonat, resultierend aus im Polyethercarbonatpolyol eingebautem Kohlendioxid: Resonanzen bei 1,25 bis 1,32 ppm mit der Fläche B, Fläche der Resonanz entspricht 3 H Atomen,
- cyclisches Carbonat: Resonanz bei 1,45-1,49 ppm mit der Fläche C, Fläche der Resonanz entspricht 3 H Atomen,
- nicht abreagiertes Propylenoxid: Resonanz bei 2,95-2,99 ppm mit der Fläche D, Fläche der Resonanz entspricht einem H Atom,
- nicht abreagiertes Trimethylencarbonat: 4,46 und 2,15 ppm mit den Flächen E und F, Fläche der Resonanzen entspricht 4 bzw. 2 H Atomen,
- in das Polymer eingebautes Trimethylencarbonat: 4,24 und 2,05 ppm mit den Flächen G und H, Fläche der Resonanzen entspricht 4 bzw. 2 H Atomen.

Der Anteil des im Polymer eingebauten Carbonats in der Reaktionsmischung wird wie folgt berechnet:

Unter Berücksichtigung der relativen Intensitäten wurde der Anteil des polymer gebundenen Carbonats ("lineares Carbonat" LC) in der Reaktionsmischung in mol% gemäß Formel (V) berechnet,

$$LC = \frac{B}{A+B} * 100\% \qquad \text{(V).}$$

Der Gewichtsanteil (in Gew.-%) polymer-gebundenen Carbonats (LC') in der Reaktionsmischung wurde nach Formel (VI) berechnet,

$$LC' = \frac{B*102}{A*58+B*102} * 100\% \qquad \text{(VI).}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid.

Der Anteil (in mol%) an nicht abreagiertem Propylenoxid (PO) in der Reaktionsmischung wurde nach Formel (VII) berechnet,

$$PO = \frac{D}{A/3+B/3+C/3+D} * 100\% \qquad \text{(VII).}$$

Der Anteil (in mol%) an cyclischem Carbonat (CC') in der Reaktionsmischung wurde nach Formel (VIII) berechnet,

$$CC' = \frac{C/3}{A/3+B/3+C/3} * 100\% \qquad \text{(VIII).}$$

Der Anteil (in mol%) an nicht abreagiertem Trimethylencarbonat (TMC) in der Reaktionsmischung wurde nach Formel (IX) berechnet,

$$TMC = \frac{E+F}{E+F+G+H} * 100\% \qquad \text{(IX).}$$

Die $^{19}$F-NMR spektroskopischen Messungen zur Bestimmung des Verhältnisses von primären zu sekundären OH Gruppen wurden gemäß der Standard Test Methode D 4273 - 05 (Appendix) von ASTM International durchgeführt. Die Signale für primäre OH-Gruppen wurden im Bereich -75,23 bis -75,33 ppm beobachtet, die Signale für sekundäre OH-Gruppen bei -75,48 bis -75,57 ppm.

Beispiel 1

*(a) Herstellung eines Polyethercarbonatdiols (Kettenüberträger) über Copolymerisation von Propylenoxid (PO) und $CO_2$ in Gegenwert von Polypropylenglykol als Starter*

In einem 300 ml Druckreaktor wurde eine Mischung aus 7,9 mg DMC-Katalysator (hergestellt gemäß Beispiel 6 von WO-A 01/80994) und 13,3 g Polypropylenglykol (Starter, Molekulargewicht 1000 g/mol) vorgelegt und 1 h bei 130 °C unter leichtem Vakuum (50 mbar) und einem leichten Argonstrom gerührt (500 rpm). Nach dem Aufpressen von 15 bar $CO_2$ wurden 9,5 g Propylenoxid (PO) mit Hilfe einer HPLC Pumpe (1,0 mL/min) zudosiert. Die Reaktionsmischung wurde 15 min bei 130 °C gerührt (Rührgeschwindigkeit 500 $min^{-1}$). Anschließend wurden weitere 33,0 g PO über eine HPLC Pumpe (1,0 mL/min) zudosiert. Nach beendeter Zugabe wurde noch weitere 3 h bei 130 °C gerührt. Eine nach dieser Reaktionszeit entnommene Probe wurde mittels NMR Spektroskopie untersucht. Das Gemisch enthielt Polyethercarbonat 10,5 mol% Carbonateinheiten enthaltend entsprechend 17,1 wt% Kohlendioxid, 0,1 mol% Propylenoxid und 1,1 mol% cyclisches Propylencarbonat.

In einem Rotationsverdampfer wurden die niedermolekularen Bestandteile aus dem Gemisch abgetrennt und eine Probe mittels NMR Spektroskopie untersucht. Man erhielt 39,4 g eines Gemisches aus Polyethercarbonat 10,8 mol% Carbonateinheiten enthaltend, 0,0 mol% Propylenoxid und 1,1 mol% cyclisches Propylencarbonat. Über $^{19}F$ NMR Spektroskopie wurde das Verhältnis von primären zu sekundären OH-Gruppen zu 11,6/88,4 bestimmt. Das erhaltene Polyethercarbonat wies ein Molekulargewicht $M_n$ = 6520 g/mol, $M_w$ = 9530 g/mol und eine Polydispersität von 2,06 auf. Die OH Zahl des erhaltenen Gemisches war 25,7 $mg_{KOH}$/g.

*(b) Reaktion des aus Staufe a) erhaltenen Polyethercarbonatdiols mit Trimethylencarbonat (immortale ringöffnende Polymerisation mit DMC-Katalysator)*

In einem 300 mL Druckreaktor wurde eine Mischung aus 10,5 mg DMC-Katalysator (hergestellt gemäß Beispiel 6 von WO-A 01/80994), 20,1 g Polymer aus Beispiel 1 (a) und 20,1 g Trimethylencarbonat 30 min bei 110 °C unter reduziertem Druck (p = 75 mbar) und einem leichten Argonstrom gerührt (Rührgeschwindigkeit 500 $min^{-1}$). Dann wurden 1,5 bar Argon aufgepresst und 3 h bei 110 °C gerührt.

Die Ausbeute des Polymergemisches war quantitativ. Die NMR-spektroskopische Untersuchung des Reaktionsgemisches zeigte einen vollständigen Umsatz des Trimethylencarbonats. Über $^{19}F$ NMR Spektroskopie wurde das Verhältnis von primären zu sekundären OH-Gruppen zu 82,8/17,2 bestimmt. Das erhaltene Polyethercarbonat wies ein Molekulargewicht $M_n$ = 12780 g/mol, $M_w$ = 18720 g/mol und eine Polydispersität von 1,46 auf. Die OH Zahl des erhaltenen Gemisches war 16,8 $mg_{KOH}$/g.

Beispiel 2

*(a) Herstellung eines Polyethercarbonattriols (Kettenüberträger) über Copolymerisation von Propylenoxid (PO) und $CO_2$ in Gegenwart von Polypropylentriol als Starter*

In einem 300 ml Druckreaktor wurde eine Mischung aus 8,1 mg DMC-Katalysator (hergestellt gemäß Beispiel 6 von WO-A 01/80994) und 8,5 g Arcol Polyol 1110 (Starter, Molekulargewicht 700 g/mol, Funktionalität 3, OH Zahl 235 $mg_{KOH}$/g) vorgelegt und 1 h bei 130 °C unter leichtem Vakuum (50 mbar) und einem leichten Argonstrom gerührt (500 rpm). Nach dem Aufpressen von 15 bar $CO_2$ wurden 9,5 g Propylenoxid (PO) mit Hilfe einer HPLC Pumpe (1,0 mL/min) zudosiert. Die Reaktionsmischung wurde 15 min bei 130 °C gerührt (Rührgeschwindigkeit 500 $min^{-1}$). Anschließend wurden weitere 33,0 g PO über eine HPLC Pumpe (1,0 mL/min) zudosiert. Nach beendeter Zugabe wurde noch weitere 3 h bei 130 °C gerührt. Eine nach dieser Reaktionszeit entnommene Probe wurde mittels NMR Spektroskopie untersucht. Man erhielt ein Gemisch aus Polyethercarbonat 8,8 mol% Carbonateinheiten enthaltend entsprechend 14,5 wt% Kohlendioxid, kein unreagiertes Propylenoxid und 1,3 mol% cyclisches Propylencarbonat.

In einem Rotationsverdampfer wurden die niedermolekularen Bestandteile aus dem Gemisch abgetrennt und eine Probe mittels NMR Spektroskopie untersucht. Man erhielt 38,9 g eines Gemisches aus Polyethercarbonat 10,9 mol% Carbonateinheiten enthaltend, kein unreagiertes Propylenoxid und 1,5 mol% cyclisches Propylencarbonat. Über $^{19}F$ NMR Spektroskopie wurde das Verhältnis von primären zu sekundären OH-Gruppen zu 11,7/88,3 bestimmt. Das erhaltene Polyethercarbonat wies ein Molekulargewicht $M_n$ = 5620 g/mol, $M_w$ = 7340 g/mol und eine Polydispersität von 1,31 auf. Die OH Zahl des erhaltenen Gemisches war 40,0 $mg_{KOH}$/g

*(b) Reaktion des aus Stufe a) erhaltenen Polyethercarbonattriols mit Trimethylencarbonat (immortale ringöffnende Polymerisation mit DMC-Katalysator)*

In einem 300 mL Druckreaktor wurde eine Mischung aus 10,3 mg DMC-Katalysator (hergestellt gemäß Beispiel 6 von WO-A 01/80994), 20,2 g Polymer aus Beispiel 1 (a) und 20,1 g Trimethylencarbonat 30 min bei 110 °C unter reduziertem Druck (p = 75 mbar) und einem leichten Argonstrom gerührt (Rührgeschwindigkeit 500 $min^{-1}$). Dann wurden 2,1 bar Argon aufgepresst und 3 h bei 110 °C gerührt.

Die Ausbeute des Polymergemisches war quantitativ. Die NMR-spektroskopische Untersuchung des Reaktionsgemisches ergab 78,2% Umsatz an Trimethylencarbonat. Über $^{19}F$ NMR Spektroskopie wurde das Verhältnis von primären zu sekundären OH-Gruppen zu 79,8/20,2 bestimmt. Das erhaltene Polyethercarbonat wies ein Molekulargewicht $M_n$ = 11600 g/mol, $M_w$ = 18630 g/mol und eine Polydispersität von 1,61 auf. Die OH Zahl des erhaltenen Gemisches war 21,6 $mg_{KOH}$/g.

## Patentansprüche

1. Verfahren zur Herstellung von Polycarbonatpolyolen **dadurch gekennzeichnet, dass** cyclisches Carbonat in Gegenwart von DMC-Katalysator und Kettenüberträger bestehend aus Polyethercarbonatpolyolen polymerisiert werden.

2. Verfahren gemäß Anspruch 1, wobei das cyclischen Carbonat ausgewählt ist aus mindestens einer Verbindung der Gruppe bestehend aus den Verbindungen der Formeln (I) und (II),

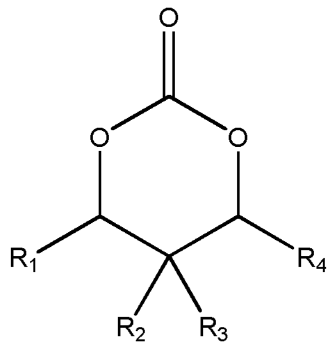

(I)

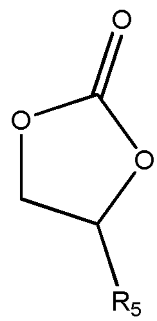

(II)

wobei

R1, R4 und R5 unabhängig voneinander für Wasserstoff oder einen linearen oder verzweigen C1 bis C12 Alkylrest oder einen C6 bis C10 Arylrest und
R2 und R3 unabhängig voneinander für Wasserstoff oder einen linearen oder verzweigten C1 bis C12 Alkylrest oder einen C6 bis C10 Arylrest oder einen Allyloxymethylrest stehen.

3. Verfahren gemäß Anspruch 1, wobei die cyclischen Carbonate ausgewählt sind aus mindestens einer der Verbindungen der Gruppe bestehend aus Trimethylencarbonat, Neopentylglykolcarbonat, 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, Propylencarbonat, Phenylethylencarbonat und Ethylencarbonat.

4. Verfahren gemäß Anspruch 1, wobei als DMC-Katalysator Zinkhexacyanocobaltat(III) eingesetzt wird, der als organischen Komplexliganden *tert*-Butanol und ein Polyetherpolyol mit einem zahlenmittleren Molekulargewicht größer 500 g/mol enthält.

5. Verfahren nach Anspruch 1, **dadurch gekennzeichnet, dass** Trimethylencarbonat als cyclisches Carbonat eingesetzt wird.

6. Verfahren gemäß Anspruch 1, **dadurch gekennzeichnet, dass** die Polymerisation des cyclischen Carbonats in

Gegenwart von DMC-Katalysator und mindestens eines Kettenüberträgers bei einer Reaktionstemperatur von 60 bis 160°C erfolgt.

7. Verfahren gemäß Anspruch 1, **dadurch gekennzeichnet, dass** das Gewichtsverhältnis von Kettenüberträger zu cyclischem Carbonat 1 : 0,001 bis 1 : 50 beträgt.

8. Verfahren gemäß Anspruch 1, **dadurch gekennzeichnet, dass**

(i) H-funktionelle Startersubstanz oder ein Gemisch aus mindestens zwei H-funktionellen Startersubstanzen vorgelegt werden, wobei der DMC-Katalysator, die H-funktionellen Startersubstanz oder das Gemisch aus mindestens zwei H-funktionellen Startersubstanzen vor oder nach der Trocknung zugesetzt werden,
(ii) Alkylenoxide und Kohlendioxid zu der aus Schritt (i) resultierenden Mischung zugesetzt werden ("Copolymerisation" unter Bildung des Polyethercarbonatpolyol-Kettenüberträgers),
(iii) zu dem aus Schritt (ii) resultierenden Gemisch das cyclische Carbonat, das gleich oder verschieden sein kann von dem in der aus Schritt (ii) resultierenden Mischung enthaltenen cyclischen Carbonat, wobei das Gewichtsverhältnis von aus Schritt (ii) resultierenden Gemisch zu zugesetztem cyclischen Carbonat von 1 : 0,001 bis 1 : 50 beträgt, und diese resultierende Mischung bei einer Temperatur von 60 bis 160°C, zur Reaktion gebracht wird.

9. Verfahren gemäß Anspruch 8, **dadurch gekennzeichnet, dass** in Schritt (iii) kein DMC-Katalysator zugegeben wird.

10. Verfahren gemäß Anspruch 1, **dadurch gekennzeichnet, dass** als Kettenüberträger ein Polycarbonat eingesetzt, welches gemäß dem Verfahren gemäß Anspruch 1 hergestellt wurde.

## Claims

1. Process for the preparation of polycarbonate polyols, **characterised in that** cyclic carbonate is polymerised in the presence of DMC catalyst and chain-transfer agent consisting of polyether carbonate polyols.

2. Process according to claim 1, wherein the cyclic carbonate is selected from at least one compound of the group comprising the compounds of formulae (I) and (II)

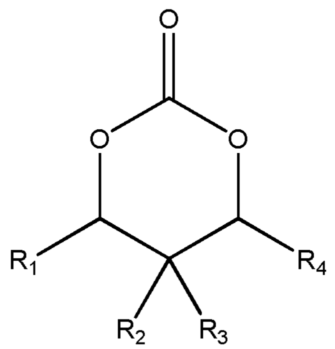
(I)

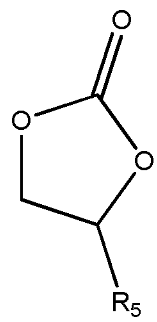
(II)

wherein

R1, R4 and R5 independently of one another represent hydrogen or a linear or branched C1 to C12 alkyl radical or a C6 to C10 aryl radical, and
R2 and R3 independently of one another represent hydrogen or a linear or branched C1 to C12 alkyl radical or a C6 to C10 aryl radical or an allyloxymethyl radical.

3. Process according to claim 1, wherein the cyclic carbonates are selected from at least one of the compounds of the group comprising trimethylene carbonate, neopentyl glycol carbonate, 2,2,4-trimethyl-1,3-pentanediol carbonate, 2,2-dimethyl-1,3-butanediol carbonate, 1,3-butanediol carbonate, 2-methyl-1,3-propanediol carbonate, 2,4-pentanediol carbonate, 2-methylbutane-1,3-diol carbonate, TMP-monoallyl ether carbonate, pentaerythritol diallyl ether

carbonate, propylene carbonate, phenylethylene carbonate and ethylene carbonate.

**4.** Process according to claim 1, wherein there is used as the DMC catalyst zinc hexacyanocobaltate(III) which comprises as organic complex ligands *tert*-butanol and a polyether polyol having a number-average molecular weight greater than 500 g/mol.

**5.** Process according to claim 1, **characterised in that** trimethylene carbonate is used as the cyclic carbonate.

**6.** Process according to claim 1, **characterised in that** the polymerisation of the cyclic carbonate takes place in the presence of DMC catalyst and at least one chain-transfer agent at a reaction temperature of from 60 to 160°C.

**7.** Process according to claim 1, **characterised in that** the weight ratio of chain-transfer agent to cyclic carbonate is from 1:0.001 to 1:50.

**8.** Process according to claim 1, **characterised in that**

(i) H-functional starter substance, or a mixture of at least two H-functional starter substances, are placed in a reaction vessel, wherein the DMC catalyst, the H-functional starter substance, or the mixture of at least two H-functional starter substances, are added before or after the drying,
(ii) alkylene oxides and carbon dioxide are added to the mixture resulting from step (i) ("copolymerisation" with formation of the polyether carbonate polyol chain-transfer agent),
(iii) to the mixture resulting from step (ii) there is added the cyclic carbonate, which can be the same as or different from the cyclic carbonate contained in the mixture resulting from step (ii), wherein the weight ratio of mixture resulting from step (ii) to added cyclic carbonate is from 1:0.001 to 1:50, and this resulting mixture is reacted at a temperature of from 60 to 160°C.

**9.** Process according to claim 8, **characterised in that** no DMC catalyst is added in step (iii).

**10.** Process according to claim 1, **characterised in that** there is used as the chain-transfer agent a polycarbonate which has been prepared by the process according to claim 1.

## Revendications

**1.** Procédé de fabrication de polycarbonate-polyols, **caractérisé en ce qu'**un carbonate cyclique est polymérisé en présence d'un catalyseur DMC et d'un agent de transfert de chaîne constitué par des polyéther-carbonate-polyols.

**2.** Procédé selon la revendication 1, dans lequel le carbonate cyclique est choisi parmi au moins un composé du groupe constitué par les composés de formule (I) et (II)

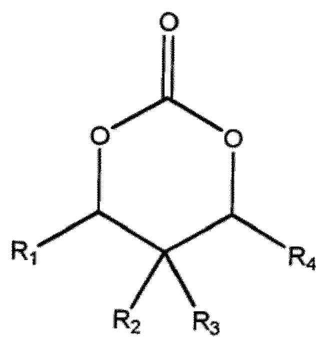

(I)

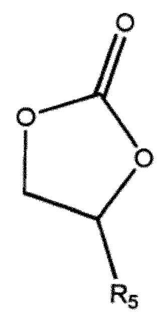

(II)

dans lesquelles
R1, R4 et R5 représentent indépendamment les uns des autres l'hydrogène ou un radical alkyle linéaire ou ramifié en C1 à C12 ou un radical aryle en C6 à C10, et R2 et R3 représentent indépendamment l'un de l'autre l'hydrogène ou un radical alkyle linéaire ou ramifié en C1 à C12 ou un radical aryle en C6 à C10 ou un radical allyloxyméthyle.

3. Procédé selon la revendication 1, dans lequel les carbonates cycliques sont choisis parmi au moins un des composés du groupe constitué par le carbonate de triméthylène, le carbonate de néopentylglycol, le carbonate de 2,2,4-triméthyl-1,3-pentanediol, le carbonate de 2,2-diméthyl-1,3-butanediol, le carbonate de 1,3-butanediol, le carbonate de 2-méthyl-1,3-propanediol, le carbonate de 2,4-pentanediol, le carbonate de 2-méthyl-butane-1,3-diol, le carbonate d'éther monoallylique de TMP, le carbonate d'éther diallylique de pentaérythrite, le carbonate de propylène, le carbonate de phényléthylène et le carbonate d'éthylène.

4. Procédé selon la revendication 1, dans lequel de l'hexacyanocobaltate de zinc (III) est utilisé en tant que catalyseur DMC, qui contient en tant que ligand complexe organique du *tert*-butanol et un polyéther polyol ayant un poids moléculaire moyen en nombre supérieur à 500 g/mol.

5. Procédé selon la revendication 1, **caractérisé en ce que** du carbonate de triméthylène est utilisé en tant que carbonate cyclique.

6. Procédé selon la revendication 1, **caractérisé en ce que** la polymérisation du carbonate cyclique a lieu en présence d'un catalyseur DMC et d'au moins un agent de transfert de chaîne à une température de réaction de 60 à 160 °C.

7. Procédé selon la revendication 1, **caractérisé en ce que** le rapport en poids entre l'agent de transfert de chaîne et le carbonate cyclique est de 1:0,001 à 1:50.

8. Procédé selon la revendication 1, **caractérisé en ce que**

   (i) une substance de départ à fonction H ou un mélange d'au moins deux substances de départ à fonction H est chargé initialement, le catalyseur DMC, la substance de départ à fonction H ou le mélange d'au moins deux substances de départ à fonction H étant ajoutés avant ou après le séchage,
   (ii) des oxydes d'alkylène et du dioxyde de carbone sont ajoutés au mélange résultant de l'étape (i) (« copolymérisation » avec formation de l'agent de transfert de chaîne polyéther-carbonate-polyol),
   (iii) le carbonate cyclique, qui peut être identique ou différent du carbonate cyclique contenu dans le mélange résultant de l'étape (ii), est ajouté au mélange résultant de l'étape (ii), le rapport en poids entre le mélange résultant de l'étape (ii) et le carbonate cyclique ajouté étant de 1:0,001 à 1:50, et ce mélange résultant étant mis en réaction à une température de 60 à 160 °C.

9. Procédé selon la revendication 8, **caractérisé en ce qu'**aucun catalyseur DMC n'est ajouté à l'étape (iii).

10. Procédé selon la revendication 1, **caractérisé en ce qu'**un polycarbonate qui a été fabriqué par le procédé selon la revendication 1 est utilisé en tant qu'agent de transfert de chaîne.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1859863 A
- DE 10108485 A
- WO 03014186 A
- US 3404109 A
- US 3829505 A
- US 3941849 A
- US 5158922 A
- US 5470813 A
- EP 700949 A
- EP 743093 A
- EP 761798 A
- WO 9740086 A
- WO 9816310 A
- WO 0047649 A
- EP 10000511 A
- WO 2008013731 A
- US 20030149232 A
- WO 2004081082 A
- EP 1359177 A
- WO 0180994 A


### In der Beschreibung aufgeführte Nicht-Patentliteratur


- *Polymer,* 1992, vol. 33 (9), 1941-1948
- *Journal of Polymer Science,* 2000, vol. 38 (16), 2861-2871
- *Macromolecules,* 2001, vol. 34 (18), 6196-6201
- *Chemistry - A European Journal,* 2008, vol. 14 (29), 8772-8775
- *Macromol. Rapid Commun.,* 2009, vol. 30, 2128-2135